# EUROPÄISCHE PATENTSCHRIFT

(11) **EP 3 762 181 B1**
(45) Veröffentlichungstag und Bekanntmachung des Hinweises auf die Patenterteilung: **08.04.2026**
(21) Anmeldenummer: 19703078.6
(22) Anmeldetag: 04.02.2019
(51) Int. Cl.: B25F 5/02

(54) **HANDWERKZEUGMASCHINE**
HAND-HELD POWER TOOL
MACHINE-OUTIL PORTATIVE

(30) Priorität: 08.03.2018 DE 102018203519
(43) Veröffentlichungstag der Anmeldung: 13.01.2021
(73) Patentinhaber: Robert Bosch GmbH, 70442 Stuttgart (DE)
(72) Erfinder: BLUM, Jens, 70794 Filderstadt (DE); WIELER, Michael, 73614 Schorndorf (DE); ROEHM, Heiko, 70176 Stuttgart (DE); SAUR, Dietmar, 72116 Moessingen (DE); HERR, Tobias, 70569 Stuttgart (DE); ERBELE, Simon, 72218 Wildberg (DE)
(86) Internationale Anmeldenummer: PCT/EP2019/052587
(87) Internationale Veröffentlichungsnummer: WO 2019/170331

(56) Entgegenhaltungen:
- EP-A1- 2 468 459
- JP-A- 2013 237 119
- US-A- 5 169 225
- US-A1- 2007 229 008
- US-A1- 2012 106 133
- US-A1- 2016 172 722
- US-A1- 2017 167 721

## Beschreibung

Die vorliegende Erfindung betrifft eine Handwerkzeugmaschine nach dem Oberbegriff des Anspruches 1.

### Stand der Technik

Aus dem Stand der Technik ist bereits eine Handwerkzeugmaschine mit einer Antriebseinheit, mit einem Gehäuse und mit zumindest einer Benutzerschnittstelle bekannt. Die Antriebseinheit ist mittels zumindest eines Handschalters betätigbar. Die Benutzerschnittstelle umfasst zumindest ein Bedienelement.

Aus der US 2012/106133 A1 ist eine Handwerkzeugmaschine gemäß dem Oberbegriff des Anspruchs 1 bekannt. In der US 2012/106133 A1 wird eine Handwerkzeugmaschine offenbart, die mit einer Leuchteinrichtung zur Arbeitsfeldbeleuchtung ausgestattet ist, wobei die Leuchteinrichtung ein Leuchtmittel umfasst und ein Schalterdrücker zur Betätigung oder Einstellung eines Antriebsmotors der Handwerkzeugmaschine einen Bestandteil der Leuchteinrichtung bildet, derart, dass vom Leuchtmittel ausgesandte Lichtstrahlen über den Schalterdrücker zum Arbeitsfeld geleitet werden.

### Offenbarung der Erfindung

Die vorliegende Erfindung geht aus von einer Handwerkzeugmaschine mit einer Antriebseinheit, mit einem Gehäuse und mit zumindest einer Benutzerschnittstelle. Die Antriebseinheit ist mittels zumindest eines Handschalters betätigbar. Die Benutzerschnittstelle umfasst zumindest ein Bedienelement. Es wird vorgeschlagen, dass die Benutzerschnittstelle zumindest eine Arbeitsstellenbeleuchtungseinheit aufweist, wobei die Arbeitsstellenbeleuchtungseinheit zumindest ein Leuchtmittel und zumindest ein Lichtleitelement umfasst.

Die Erfindung stellt eine integrierte Benutzerschnittstelle bereit, bei der eine Bedieneinheit und eine Arbeitsstellenbeleuchtungseinheit in einem Modul integriert ist. Die Benutzerschnittstelle ist besonders kompakt und gleichzeitig robust.

Die Handwerkzeugmaschine ist insbesondere als ein Drehschlagschrauber ausgebildet. Der Drehschlagschrauber weist zumindest ein Schlagwerk, insbesondere ein Rotationsschlagwerk, auf. Das Schlagwerk erzeugt während des Betriebs hohe Drehmomentspitzen, um so festsitzende Verbindungsmittel zu lösen oder Verbindungsmittel zu befestigen. Das Schlagwerk ist mittels dem Getriebe mit dem Antriebsmotor verbunden. Zusätzlich ist das Schlagwerk mit der Abtriebswelle verbunden.

Die Antriebseinheit umfasst zumindest einen Antriebsmotor und kann in einer Ausführungsform zumindest ein Getriebe aufweisen. Der Antriebsmotor kann insbesondere als zumindest ein Elektromotor ausgebildet sein. Das Getriebe kann als zumindest ein Planetengetriebe ausgebildet sein, wobei es beispielsweise schaltbar sein kann. Die Erfindung kann auch bei anderen Motorenarten oder Getriebearten zur Anwendung kommen. Zusätzlich umfasst die Handwerkzeugmaschine eine Energieversorgung, wobei die Energieversorgung für einen Akkubetrieb mittels Akkus, insbesondere Handwerkzeugmaschinenakkupacks, und/oder für einen Netzbetrieb vorgesehen ist. In einer bevorzugten Ausführungsform ist die Energieversorgung für den Akkubetrieb ausgebildet. Im Rahmen der vorliegenden Erfindung soll unter einem "Handwerkzeugmaschinenakkupack" ein Zusammenschluss von zumindest einer Akkuzelle und einem Akkupackgehäuse verstanden werden. Der Handwerkzeugmaschinenakkupack ist vorteilhafter Weise zur Energieversorgung von handelsüblichen akkubetriebenen Handwerkzeugmaschinen ausgebildet. Die zumindest eine Akkuzelle kann beispielsweise als eine Li-Ion-Akkuzelle mit einer Nennspannung von 3,6 V ausgebildet sein. Beispielhaft kann der Handwerkzeugmaschinenakkupack bis zu zehn Akkuzellen umfassen, wobei auch eine andere Anzahl von Akkuzellen denkbar ist. Eine Ausführungsform als akkubetriebene Handwerkzeugmaschine als auch der Betrieb als netzbetriebene Handwerkzeugmaschine sind dem Fachmann hinreichend bekannt, weshalb hier nicht auf die Einzelheiten der Energieversorgung eingegangen wird.

Die Antriebseinheit ist derart ausgestaltet, dass sie über den Handschalter betätigbar ist. Wird der Handschalter durch einen Benutzer betätigt, wird die Antriebseinheit eingeschalten und die Handwerkzeugmaschine wird in Betrieb genommen. Wird entsprechend der Handschalter durch den Benutzer nicht weiter betätigt, wird die Antriebseinheit ausgeschalten. Bevorzugt ist die Antriebseinheit derart elektronisch steuer- und/oder regelbar, dass ein Reversierbetrieb und eine Vorgabe für eine gewünschte Drehgeschwindigkeit realisierbar sind. Es ist auch denkbar, dass es sich bei dem Handschalter um einen einrastbaren Handschalter handelt, der in zumindest einem Betätigungszustand in zumindest einer Position einrastbar ist.

Die Handwerkzeugmaschine weist die Benutzerschnittstelle mit dem Bedienelement auf. Insbesondere ist die Benutzerschnittstelle an dem Gehäuse angeordnet. Die Benutzerschnittstelle kann eine Schnittstelle zwischen dem Benutzer und der Handwerkzeugmaschine sein. Das Bedienelement ist dazu ausgebildet, Eingaben durch den Benutzer zu empfangen. Vorteilhafter Weise dient das Bedienelement zumindest zur Einstellung zumindest eines Betriebsmodus, insbesondere einer Drehzahlstufe, und/oder zumindest zur Steuerung und/oder Regelung der Arbeitsstellenbeleuchtungseinheit. Es ist denkbar, dass das Bedienelement auch zur Einstellung eines durch den Benutzer zuweisbaren Betriebsmodus belegbar ist. Weiter kann das Bedienelement auch zur Einstellung eines weiteren, dem Fachmann als sinnvoll erscheinenden, Betriebsmodus dienen.

Die Benutzerschnittstelle kann die Eingaben durch den Benutzer in ein, insbesondere elektrisches, Signal umwandeln. Anschließend kann die Benutzerschnittstelle das Signal an eine Signalverarbeitungseinheit weiterleiten. Die Benutzerschnittstelle kann zudem auch Informationen mittels zumindest einem Anzeigeelement anzeigen. Vorteilhafterweise weist die Benutzerschnittstelle das Anzeigeelement auf. Das Anzeigeelement ist dazu ausgebildet, zumindest eine Information zu einem Betriebszustand, dem Betriebsmodus und/oder einer Betriebsinformation anzuzeigen. Das Anzeigeelement kann als ein Leuchtmittel und/oder als ein Display, oder weitere, dem Fachmann als sinnvoll erscheinende, Anzeigeelemente ausgebildet sein. In einer Ausführungsform kann das Anzeigeelement drei LEDs für die Anzeige der Drehzahlstufe aufweisen.

Der Betriebszustand kann beispielsweise "eingeschalten" oder "ausgeschalten" sein. Der Betriebsmodus kann beispielhaft zumindest eine Drehzahl, zumindest eine Drehzahlstufe oder zumindest eine Schlagenergie sein. Beispiele für die Betriebsinformation sind "Pairing mit einem elektrischen Gerät", "verbunden mit einem elektrischen Gerät", "unverbunden mit einem elektrischen Gerät" oder zumindest ein Batterieladezustand.

Zudem sind auch weitere Beispiele für Betriebszustände, Betriebsmodi und/oder Betriebsinformationen möglich, die dem Fachmann als sinnvoll erscheinen.

In einer Ausführungsform ist die Signalverarbeitungseinheit im Gehäuse der Handwerkzeugmaschine angeordnet. Die Signalverarbeitungseinheit ist insbesondere dazu ausgebildet, Signale von der Benutzerschnittstelle zu empfangen, diese zu verarbeiten und auszugeben. Die Signalverarbeitungseinheit verarbeitet die Signale in zumindest ein Ausgabesignal und gibt dieses aus. Das Ausgabesignal kann dann an die Benutzerschnittstelle gesendet werden und/oder die Antriebseinheit steuern und/oder regeln. Beispielsweise kann der Handschalter auch mit der Signalverarbeitungseinheit verbunden sein. Die Signalverarbeitungseinheit kann als ein Mikroprozessor oder als ein Mikrocontroller ausgebildet sein.

In einer besonders vorteilhaften Weise umfasst die Benutzerschnittstelle zumindest ein weiteres Bedienelement. In einer ähnlichen Weise wie das Bedienelement, kann das weitere Bedienelement zumindest zur Einstellung zumindest eines Betriebsmodus, insbesondere einer Drehzahlstufe, und/oder zumindest zur Steuerung und/oder Regelung der Arbeitsstellenbeleuchtungseinheit dienen. Hierbei kann das Bedienelement und/oder das weitere Bedienelement die Arbeitsstellenbeleuchtungseinheit einschalten oder ausschalten, wie auch eine Leuchtleistung, insbesondere eine Helligkeit, kontinuierlich oder inkrementell, erhöhen oder erniedrigen.

Das Bedienelement ist ein von dem Benutzer betätigbares Bedienelement, über das der Benutzer zumindest den Betriebszustand, den Betriebsmodus und/oder die Betriebsinformation verändern kann. Das Bedienelement kann als zumindest ein Drückerelement, als zumindest ein Schiebeelement, als zumindest ein Drehelement oder aber als zumindest ein Kippelement ausgebildet sein. Auch weitere Ausführungsformen des zumindest einen Bedienelementes sind denkbar. Das zumindest eine Drückerelement ist dazu ausgebildet, von einem Benutzer gedrückt zu werden. Das zumindest eine Schiebeelement ist dazu vorgesehen, von einem Benutzer verschoben zu werden. Das zumindest eine Drehelement ist dazu ausgebildet, von einem Benutzer gedreht zu werden. Das zumindest eine Kippelement ist dazu vorgesehen, von einem Benutzer gekippt zu werden. Je nach Ausführungsform ist auch eine Kombination aus den genannten Bedienelementen möglich.

In einer Ausführungsform kann das Bedienelement zumindest einen bedruckten und/oder einen profilierten Bereich aufweisen. Insbesondere ist der bedruckte und/oder profilierte Bereich auf einer Bedienfläche des Bedienelementes ausgebildet. Der bedruckte und/oder profilierte Bereich hat zur Aufgabe dem Benutzer zumindest eine Funktion des Bedienelementes anzuzeigen. Die Funktion wird auf der Bedienfläche durch den bedruckten und/oder profilierten Bereich beispielsweise in Form von einem Leuchtmittel, beispielsweise einer Glühbirne oder weiteren vergleichbaren Figuren, Zeichen oder dergleichen, in Form eines Hammers mit einer Schraube oder in Form eines Drehzahlmessers, angezeigt. Hierfür sind jedoch auch weitere Darstellungen der Funktionen des Bedienelementes denkbar. Aufgrund des bedruckten und/oder profilierten Bereichs ist dem Benutzer direkt ersichtlich, wie das Bedienelement betätigt werden kann. Der bedruckte Bereich wird durch zumindest einen Aufdruck auf die Bedienfläche ausgebildet. Der profilierte Bereich ist durch Rippen, Rillen, Noppen oder weiteren vergleichbaren Elemente ausgebildet, um die Funktion anzuzeigen. Zudem ist der profilierte Bereich derart ausgebildet, dass ein Verrutschen des Fingers des Benutzers während einer Betätigung des Bedienelementes vermieden wird. Die zumindest eine Betätigung ist wie oben beschrieben. Insbesondere ist in einer bevorzugten Ausführungsform die zumindest eine Betätigung zumindest ein Drücken des Bedienelementes.

In einer Ausführungsform weist das Bedienelement und/oder das weitere Bedienelement zumindest ein Rückstellelement auf. Das Rückstellelement ist dazu vorgesehen, das Bedienelement und/oder das weitere Bedienelement in zumindest eine Neutralposition zu führen. Die Neutralposition zeichnet sich dadurch aus, dass das Bedienelement und/oder das weitere Bedienelement in der Neutralposition betätigbar ist. Insbesondere weist das Rückstellelement zumindest eine rückstellende Wirkung auf, sodass nach der zumindest einen Betätigung das Bedienelement und/oder das weitere Bedienelement in die Neutralposition geführt wird. Anschließend ist das Bedienelement und/oder das weitere Bedienelement in der Neutralposition angeordnet, sodass zumindest eine nächste Betätigung ermöglicht wird. Bevorzugt ist das Rückstellelement als zumindest ein Federelement ausgebildet. In einer Ausführungsform ist das Federelement als eine kuppelförmige Feder ausgeformt, wobei alternativ eine Spiralfeder oder dergleichen denkbar ist. Durch das Rückstellelement, insbesondere das Federelement, ganz insbesondere die kuppelförmige Feder, wird eine direkte haptische Rückmeldung bei der Betätigung des Bedienelements und/oder des weiteren Bedienelements ermöglicht, wodurch der Benutzerkomfort gesteigert wird.

Die Arbeitsstellenbeleuchtungseinheit umfasst das Leuchtmittel und das Lichtleitelement. Die Arbeitsstellenbeleuchtungseinheit ist dazu ausgebildet, Licht auszusenden. Weiter wird das Licht bevorzugt zu einem unmittelbar vor der Handwerkzeugmaschine liegenden Arbeitsstellenbereich ausgesandt. Hierbei kann eine Beleuchtung des Arbeitsstellenbereichs wie auch des austauschbaren Einsatzwerkzeuges erfolgen. Beispielsweise kann es sich bei dem Leuchtmittel um zumindest eine LED handeln. Das Leuchtmittel sendet das Licht aus. Das Lichtleitelement ist dazu ausgebildet, Licht zu leiten. Weiter ist das Lichtleitelement dazu vorgesehen, das Licht zu brechen und an den Arbeitsstellenbereich zu leiten. Bevorzugt kann das Lichtleitelement als ein Lichtfokussierelement, insbesondere eine Fokussierlinse, ausgebildet sein. Es ist denkbar, dass das Leuchtmittel und das Lichtleitelement einstückig ausgebildet sind, dass in einer Ausführungsform die zumindest eine LED das Lichtfokussierelement, insbesondere die Fokussierlinse, ausbildet.

Bevorzugt weist das Gehäuse zumindest eine Energieversorgungshaltevorrichtung, insbesondere eine Handwerkzeugmaschinenakkupackhaltevorrichtung, auf, an der die Benutzerschnittstelle angeordnet ist. Die Energieversorgungshaltevorrichtung ist insbesondere dazu ausgebildet, die Energieversorgung, insbesondere den Handwerkzeugmaschinenakkupack, zu halten, insbesondere aufzunehmen. Zusätzlich ist die Energieversorgungshaltevorrichtung dazu vorgesehen, die Energieversorgung, insbesondere den Handwerkzeugmaschinenakkupack, werkzeugfrei lösbar mit dem Gehäuse zu verbinden und die Energieversorgung der Handwerkzeugmaschine sicherzustellen. Die Energieversorgungshaltevorrichtung bildet mit einem verbundenen Handwerkzeugmaschinenakkupack zumindest einen Standfuß mit zumindest einer Standfläche aus. Insbesondere kann die Handwerkzeugmaschine mittels dem Standfuß auf einer Standfläche gelagert, insbesondere gestellt, werden. Das Gehäuse umfasst zudem einen Handgriff. Der Handgriff ist dazu ausgebildet, von dem Benutzer ergriffen zu werden, um die Handwerkzeugmaschine einzusetzen. Die Energieversorgungshaltevorrichtung ist insbesondere an dem Handgriff angeordnet.

Die Benutzerschnittstelle ist vorteilhafter Weise an der Energieversorgungshaltevorrichtung angeordnet. Insbesondere ist die Benutzerschnittstelle derart an der Energieversorgungshaltevorrichtung angeordnet, dass die Arbeitsstellenbeleuchtungseinheit der Benutzerschnittstelle eine möglichst große Beleuchtung des Arbeitsstellenbereichs bereitstellen kann.

Alternativ kann die Benutzerschnittstelle auch an dem Handgriff, insbesondere im Bereich des Handschalters, angeordnet sein oder aber bei einer Werkzeugaufnahme. Die Antriebseinheit kann über das Schlagwerk mit einer Abtriebswelle verbunden sein. An einem freien Ende der Abtriebswelle, insbesondere in einer von der Antriebseinheit wegweisenden Richtung, ist die Werkzeugaufnahme ausgebildet. Die Werkzeugaufnahme ist dazu vorgesehen, austauschbare Einsatzwerkzeuge aufzunehmen. Die Werkzeugaufnahme kann als ein Spannfutter ausgeformt sein, aber auch als eine Mehrkant-Innenaufnahme oder als eine Mehrkant-Außenaufnahme. Typische Beispiele für Werkzeugaufnahmen sind aus dem Stand der Technik hinreichend bekannt, weshalb hier nicht näher darauf eingegangen wird.

Erfindungsgemäß weist die Benutzerschnittstelle zumindest ein Trägerelement auf, das dazu ausgebildet ist, die Benutzerschnittstelle zu tragen und auftretende Bedienkräfte in das Gehäuse abzuleiten. In einer Ausführungsform kann das Trägerelement die Benutzerschnittstelle aufnehmen. Das Trägerelement kann die Benutzerschnittstelle form-, kraft-und/oder stoffschlüssig aufnehmen und eine Wirkverbindung mit dem Gehäuse ausbilden. Wird das Bedienelement der Benutzerschnittstelle durch den Benutzer betätigt, können Bedienkräfte entstehen. Diese Bedienkräfte werden von der Benutzerschnittstelle aufgenommen und anschließend an das Trägerelement weitergeleitet. Bevorzugt nimmt das Trägerelement diese Bedienkräfte auf und leitet diese an das Gehäuse weiter. Das Trägerelement ist hierzu mit dem Gehäuse wirkverbunden. Insbesondere wird die Benutzerschnittstelle durch eine Ausnehmung des Gehäuses aufgenommen und mit dem Gehäuse befestigt. Das Gehäuse ist hierbei dazu ausgebildet, die Bedienkräfte aufzunehmen. Die Bedienkräfte können beispielsweise durch drücken, schieben, ziehen oder drehen des Bedienelements entstehen.

Das Trägerelement ist insbesondere als zumindest ein Bedienträgerelement und/oder als zumindest ein Lichtleitträgerelement ausgebildet. Das Bedienträgerelement trägt zumindest das Bedienelement. Insbesondere kann das Bedienträgerelement das Bedienelement ausbilden. In einer Ausführungsform kann das Bedienträgerelement mit dem Bedienelement nach Art einer Folientastatur ausgebildet sein, wobei auch eine Ausführungsform nach Art einer Platine mit mechanischen Schaltern oder Tastern denkbar ist. In einer Ausgestaltung nach Art der Folientastatur stellt das Bedienträgerelement mit dem Bedienelement ein geschlossenes System dar. Das geschlossene System birgt den Vorteil, dass ein Eindringen von Feuchtigkeit und Schmutz in die Folientastatur verhindert wird, sodass eine IP Schutzklasse von bis zu IP54, insbesondere IP64, erreicht werden kann. Weiter ist das Bedienträgerelement dazu vorgesehen, Signale, die durch die Betätigung des Bedienelementes entstehen, von dem Bedienelement aufzunehmen und weiter zu leiten. Insbesondere leitet das Bedienträgerelement die Signale an die Signalverarbeitungseinheit weiter. Zusätzlich ist das Bedienträgerelement dazu ausgebildet, die Bedienkräfte von dem Bedienelement aufzunehmen.

Das Lichtleitträgerelement kann die Bedienkräfte aufnehmen, die durch die Betätigung des Bedienelementes auftreten, und an das Gehäuse weiterleiten. Hierzu weist das Lichtleitträgerelement eine Grundplatte auf. Die Grundplatte ist in einem direkten und unmittelbaren Kontakt zu dem Gehäuse. Insbesondere nimmt die Grundplatte die Bedienkräfte auf und leitet diese an das Gehäuse weiter. Weiter trägt das Lichtleitträgerelement zumindest das Lichtleitelement und richtet es am Gehäuse aus. Insbesondere ist das Lichtleitträgerelement dazu ausgebildet, das Lichtleitelement am Gehäuse derart anzuordnen, dass das Lichtleitelement in geeigneter Weise zu dem Leuchtmittel und dem Arbeitsstellenbereich angeordnet ist. Hierdurch wird eine optimale Beleuchtung des Arbeitsstellenbereichs während dem Betrieb der Handwerkzeugmaschine ermöglicht.

Eine Ausführungsform sieht vor, dass ein Bedienträgerelement und ein Lichtleitträgerelement vorhanden sind. Das Lichtleitträgerelement trägt das Bedienträgerelement. Das Lichtleitträgerelement kann am Gehäuse befestigt sein. Das Lichtleitträgerelement nimmt so die Bedienkräfte auf, die auf das Bedienträgerelement bei der Betätigung des Bedienelementes einwirken, und leitet diese ins Gehäuse ab.

Insbesondere kann das Bedienträgerelement und/oder das Lichtleitträgerelement das Anzeigeelement aufweisen. Bevorzugt umfasst das Bedienträgerelement das Anzeigeelement zur Anzeige der Informationen, wie oben beschrieben.

In einer besonders bevorzugten Weise ist das Bedienträgerelement an dem Lichtleitträgerelement befestigt. In einer Ausführungsform können das Bedienträgerelement und das Lichtleitträgerelement lösbar als auch unlösbar miteinander befestigt sein. Hierbei können das Bedienträgerelement und das Lichtleitträgerelement eine form-, kraft-und/oder stoffschlüssige Verbindung herstellen. Beispielsweise können das Bedienträgerelement und das Lichtleitträgerelement mittels einer Schraubverbindung, Schnappverbindung, Klebeverbindung oder Klemmverbindung miteinander verbunden sein, wobei weitere, dem Fachmann als sinnvoll erscheinende, Verbindungsarten denkbar sind. Vorzugsweise sind das Bedienträgerelement und das Lichtleitträgerelement miteinander verklebt.

Vorteilhaft weist das Lichtleitträgerelement zumindest eine Aufnahme für eine elektrische Kontaktierung der Benutzerschnittstelle auf. Hierbei kann die Aufnahme als beispielsweise ein Durchführungselement, vorzugsweise eine Durchführungsöffnung, oder als eine Ausnehmung ausgebildet sein. In einer Ausführungsform wird die elektrische Kontaktierung der Benutzerschnittstelle mit der Signalverarbeitungseinheit durch zumindest eine Signalleitung ausgebildet. Die Signalleitung ist dazu vorgesehen, die Benutzerschnittstelle mit der Signalverarbeitungseinheit elektrisch zu kontaktieren. In einer Ausführungsform kann das Bedienträgerelement und/oder das Bedienelement die Signalleitung aufweisen. In einer Ausführungsform ist die Signalleitung mit dem Bedienträgerelement und/oder an dem Bedienelement verbunden. Es ist auch denkbar, dass die Signalleitung einstückig mit dem Bedienträgerelement ist. Die Signalleitung ist mit der Signalverarbeitungseinheit verbunden. Hierzu nimmt die Aufnahme die Signalleitung auf. Vorzugsweise kann die Durchführungsöffnung die Signalleitung durchführen. Die Signalverarbeitungseinheit kann ein Verbindungselement zur Verbindung mit der Signalleitung aufweisen. Die Verbindung von der Signalleitung mit dem Verbindungselement kann lösbar aber auch unlösbar sein. Beispielhaft ist das Verbindungselement als eine Steckkupplung ausgeformt. Es ist jedoch auch denkbar, dass die Signalleitung direkt mit der Signalverarbeitungseinheit mittels einer Lötverbindung verbunden ist. Die Signalleitung ist dazu vorgesehen, Signale, die durch die Betätigung des Bedienelementes entstehen, aufzunehmen und an die Signalverarbeitungseinheit weiterzuleiten. Zudem kann die Signalleitung die Ausgabesignale von der Signalverarbeitungseinheit an die Benutzerschnittstelle weiterleiten. Ferner kann das Anzeigeelement mittels der Signalleitung mit der Signalverarbeitungseinheit verbunden sein.

In einer alternativen Ausführungsform ist die Benutzerschnittstelle direkt mit der Signalverarbeitungseinheit, insbesondere dem Verbindungselement, verbunden. Hierzu kann die Benutzerschnittstelle beispielsweise Steckkontakte aufweisen, die mit dem Verbindungselement verbindbar sind.

In einer besonders vorteilhaften Weise weist das Lichtleitträgerelement zumindest ein Volumenausgleichselement zumindest für das Bedienelement auf. Insbesondere ist das Volumenausgleichselement an dem Lichtleitträgerelement ausgeformt. In einer Ausführungsform ist das Volumenausgleichselement als zumindest eine Ausnehmung, insbesondere eine Nut, ausgebildet. Das Volumenausgleichselement ist dazu ausgebildet, zumindest ein Volumen auszugleichen. Insbesondere kann das Volumenausgleichselement auch dazu vorgesehen sein, zumindest eine Temperatur und/oder zumindest einen Druck auszugleichen. Das Volumenausgleichselement ist mit dem Bedienelement wirkverbunden, sodass bei der Betätigung des Bedienelementes ein Bediendruck mittels dem Volumenausgleichselement ausgeglichen werden kann. Der Bediendruck kann zwischen dem Bedienträgerelement und dem Lichtleitträgerelement bei der Betätigung des Bedienelementes entstehen. Zudem kann das Volumenausgleichselement mit dem Anzeigeelement wirkverbunden sein. Das Anzeigeelement kann sich bei einem Einsatz erwärmen und diese Wärme kann in einer Ausführungsform mittels dem Volumenausgleichselement ausgeglichen werden.

Bevorzugt weist das Trägerelement, insbesondere das Lichtleitträgerelement, zumindest eine Ausnehmung auf, durch die zumindest das Lichtleitelement durchführbar ist. Die Ausnehmung kann als zumindest ein Durchführungselement, insbesondere eine Durchführungsöffnung, ausgebildet sein. In einer Ausführungsform sind hierzu das Lichtleitträgerelement und das Lichtleitelement zweistückig ausgeformt.

Besonders bevorzugt ist das Lichtleitelement mit dem Trägerelement, insbesondere dem Lichtleitträgerelement, befestigt. In einer Ausführungsform ist das Lichtleitelement mit dem Trägerelement, insbesondere dem Lichtleitträgerelement, form-, kraft- und/oder stoffschlüssig befestigt. Beispielsweise kann die Befestigung mittels einer Schnappverbindung, einer Schraubverbindung, einer Klemmverbindung, einer Klebeverbindung oder einer weiteren, dem Fachmann als sinnvoll erscheinenden, Verbindungsart hergestellt werden. Hierbei können das Lichtleitelement und das Trägerelement zweistückig ausgebildet sein.

In einer bevorzugten Ausführungsform sind das Trägerelement, insbesondere das Lichtleitträgerelement, und das Lichtleitelement einstückig ausgebildet. Hierdurch kann eine kostengünstige und zuverlässige Benutzerschnittstelle bereitgestellt werden. Insbesondere kann eine zuverlässige Verbindung von dem Trägerelement, insbesondere dem Lichtträgerelement, und dem Lichtleitelement ermöglicht werden.

Vorteilhafter Weise umschließt das Bedienträgerelement zumindest teilweise das Lichtleitelement. Hierdurch kann eine kompakte und kostengünstige Benutzerschnittstelle bereitgestellt werden.

Vorzugsweise weist das Trägerelement, insbesondere das Lichtleitträgerelement, zumindest eine Lagerungseinheit zur Lagerung der Benutzerschnittstelle am Gehäuse der Handwerkzeugmaschine auf. Die Lagerungseinheit ist dazu ausgebildet, die Benutzerschnittstelle am Gehäuse zu lagern. In einer Ausführungsform kann die Lagerungseinheit an dem Trägerelement, insbesondere Lichtträgerelement, beispielsweise als ein zumindest teilweise umlaufender Rahmen und/oder als ein zumindest teilweise umlaufender Steg, ausgebildet sein. Vorzugsweise ist die Lagerungseinheit einstückig mit dem Trägerelement, insbesondere Lichtträgerelement.

Besonders bevorzugt umfasst die Lagerungseinheit ein erstes zumindest teilweise umlaufendes Lagerungselement und das Gehäuse weist zumindest ein zumindest teilweise umlaufendes Halteelement auf. Das erste Lagerungselement und das Halteelement bilden eine Wirkverbindung zur vertikalen Lagerung der Benutzerschnittstelle aus. In einer Ausführungsform ist das erste Lagerungselement als ein zumindest teilweise umlaufender Steg ausgeformt und an dem Trägerelement, insbesondere Lichtträgerelement, angeformt. Beispielsweise kann das erste Lagerungselement mit dem Trägerelement, insbesondere Lichtträgerelement, form-, kraft- und/oder stoffschlüssig verbunden sein. Das Halteelement ist dazu ausgebildet, zumindest das erste Lagerungselement am Gehäuse zu halten. Insbesondere ist das Halteelement zumindest form- und/oder kraftschlüssig mit dem ersten Lagerungselement verbunden. In einer Ausführungsform kann das Halteelement an dem Gehäuse als zumindest ein Vorsprung ausgeformt sein, sodass das Halteelement mit dem ersten Lagerungselement einen Formschluss ausbildet. In einer andere Ausführungsform kann das Halteelement beispielsweise zumindest teilweise elastisch verformbar ausgebildet sein, sodass das Halteelement mit dem ersten Lagerungselement einen Kraftschluss ausbildet. Vorzugsweise ist das Halteelement einstückig mit zumindest einem Teil des Gehäuses.

In einer Ausführungsform fixiert das Halteelement das erste Lagerungselement zumindest kraftschlüssig insbesondere zur vertikalen Lagerung der Benutzerschnittstelle. Das Halteelement kann das Trägerelement mittels dem ersten Lagerungselement an dem Gehäuse klemmen und dadurch eine Klemmverbindung herstellen. Hierdurch wird eine sichere und zuverlässige Betätigung der Benutzerschnittstelle ermöglicht. Die vertikale Lagerung ist hier relativ zu einer Bezugsebene zu verstehen. Die Bezugsebene ist hierbei die Grundplatte des Lichtleitträgerelements. In einer alternativen Ausführungsform ist das erste Lagerungselement mit dem Halteelement mittels einer Schraubverbindung, einer Schnappverbindung oder einer weiteren, dem Fachmann als sinnvoll erscheinenden, Verbindungsart verbunden.

Ganz bevorzugt umfasst die Lagerungseinheit ein zweites zumindest teilweise umlaufendes Lagerungselement und das Gehäuse weist zumindest ein zumindest teilweise umlaufendes Festlegungselement auf. Das zweite Lagerungselement und das Festlegungselement bilden eine Wirkverbindung zur horizontalen Lagerung der Benutzerschnittstelle aus. In einer Ausführungsform ist das zweite Lagerungselement als ein zumindest teilweise umlaufender Rahmen ausgebildet. Das zweite Lagerungselement ist an dem Trägerelement, insbesondere Lichtträgerelement, angeordnet. Beispielshaft kann das zweite Lagerungselement mit dem Trägerelement, insbesondere Lichtträgerelement, form-, kraft- und/oder stoffschlüssig verbunden sein. Das Festlegungselement ist dazu vorgesehen, zumindest das zweite Lagerungselement am Gehäuse festzulegen. In einer Ausführungsform wird das Festlegungselement zumindest von einem Teil des Gehäuses ausgeformt. Insbesondere kann das Festlegungselement an dem Gehäuse als zumindest ein weiterer Vorsprung ausgeformt sein. Möglich ist auch, dass das Festlegungselement einstückig mit zumindest einem Teil des Gehäuses ist. Das Festlegungselement ist dazu ausgebildet, zumindest form- und/oder kraftschlüssig mit dem zweiten Lagerungselement verbindbar zu sein. In einer Ausführungsform legt das Festlegungselement das zweite Lagerungselement zumindest formschlüssig zur horizontalen Lagerung der Benutzerschnittstelle fest. Hierdurch wird eine sichere und zuverlässige Lagerung der Benutzerschnittstelle ermöglicht. Die horizontale Lagerung ist hier relativ zu der Bezugsebene, insbesondere der Grundplatte des Lichtleitträgerelements, zu verstehen. Es ist jedoch auch denkbar, dass das zweite Lagerungselement mit dem Festlegungselement mittels einer Klemmverbindung, einer Schnappverbindung, einer Klebeverbindung oder einer weiteren, dem Fachmann als sinnvoll erscheinenden, Verbindungsart verbunden ist.

### Kurze Beschreibung der Zeichnungen

Die Erfindung wird nachfolgend anhand von bevorzugten Ausführungsformen erläutert. Die Zeichnungen im Folgenden zeigen:
Fig. 1 eine schematische Ansicht einer erfindungsgemäßen Handwerkzeugmaschine mit einer Benutzerschnittstelle;
Fig. 2 ein perspektivischer Ausschnitt der Handwerkzeugmaschine mit der Benutzerschnittstelle;
Fig. 3 eine Schnittansicht der Benutzerschnittstelle an der Handwerkzeugmaschine;
Fig. 4 eine perspektivische Ansicht der Benutzerschnittstelle;
Fig. 5a eine perspektivische Ansicht eines Lichtleitelements mit einem Lichtleitträgerelement;
Fig. 5b eine perspektivische Ansicht eines Bedienträgerelementes mit einem Bedienelement und einem weiteren Bedienelement;
Fig. 6a eine Draufsicht einer ersten alternativen Ausführungsform der Benutzerschnittstelle;
Fig. 6b eine Draufsicht einer zweiten alternativen Ausführungsform der Benutzerschnittstelle
Fig. 6c eine schematische Schnittansicht einer dritten alternativen Ausführungsform der Benutzerschnittstelle;
Fig. 6d eine schematische Schnittansicht einer vierten alternativen Ausführungsform der Benutzerschnittstelle;

### Beschreibung der Ausführungsbeispiele

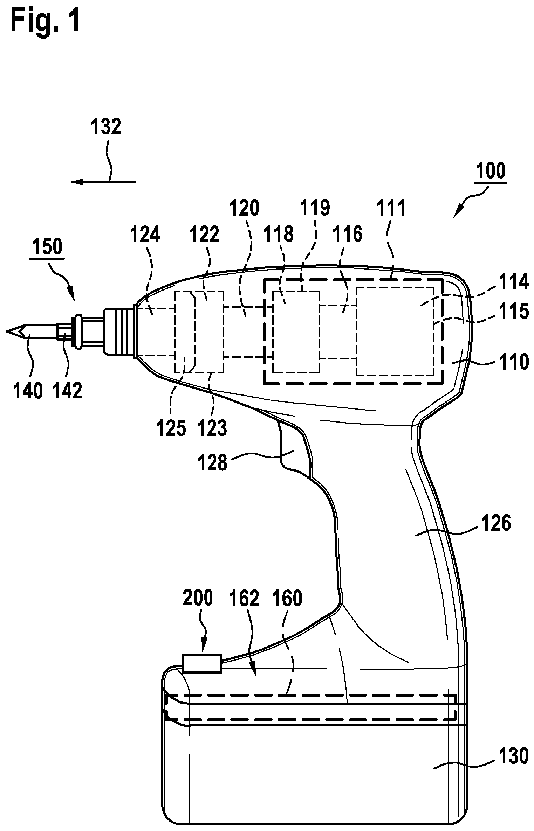

Fig. 1 zeigt eine erfindungsgemäße Handwerkzeugmaschine 100, wobei sie hier als ein beispielhafter Akku-Drehschlagschrauber ausgebildet ist. Die Handwerkzeugmaschine 100 umfasst eine Abtriebswelle 124, eine Werkzeugaufnahme 150 und ein beispielhaftes Schlagwerk 122, z.B. ein Dreh- bzw. Rotationsschlagwerk. Die Handwerkzeugmaschine 100 weist ein Gehäuse 110 mit einem Handgriff 126 auf. Die Handwerkzeugmaschine 100 ist zu einer netzunabhängigen Stromversorgung mechanisch und elektrisch mit einer Energieversorgung für einen Akkubetrieb verbindbar, sodass die Handwerkzeugmaschine 100 als akkubetriebene Handwerkzeugmaschine 100 ausgebildet ist. Als Energieversorgung dient hier ein Handwerkzeugmaschinenakkupack 130. Die vorliegende Erfindung ist jedoch nicht auf akkubetriebene Handwerkzeugmaschinen beschränkt, sondern kann auch bei netzabhängigen, also netzbetriebenen, Handwerkzeugmaschinen oder pneumatisch betriebenen Handwerkzeugmaschinen angewendet werden.

Das Gehäuse 110 umfasst dabei illustrativ eine Antriebseinheit 111 und das Schlagwerk 122. Die Antriebseinheit 111 umfasst ferner einen elektrischen Antriebsmotor 114, welcher von dem Handwerkzeugmaschinenakkupack 130 mit Strom versorgt wird, und ein Getriebe 118. Das Getriebe 118 kann als zumindest ein Planetengetriebe ausgebildet sein. Der Antriebsmotor 114 ist derart ausgelegt, dass er beispielsweise über einen Handschalter 128 betätigbar ist, sodass der Antriebsmotor 114 ein- und ausschaltbar ist. Der Antriebsmotor 114 kann ein beliebiger Motortyp, wie beispielsweise ein elektronisch kommutierter Motor oder ein Gleichstrommotor, sein. Vorteilhaft ist der Antriebsmotor 114 elektronisch steuer- und/oder regelbar, sodass ein Reversierbetrieb, sowie eine gewünschte Drehgeschwindigkeit, realisierbar sind. Der Aufbau und die Funktionsweise eines geeigneten Antriebsmotors sind dem Fachmann hinlänglich bekannt, weshalb hier nicht näher darauf eingegangen wird.

Das Getriebe 118 ist mit dem Antriebsmotor 114 über eine Motorwelle 116 verbunden. Das Getriebe 118 ist dazu vorgesehen, eine Drehung der Motorwelle 116 in eine Drehung zwischen dem Getriebe 118 und dem Schlagwerk 122 über ein Antriebsglied 120, beispielsweise einer Antriebswelle, umzuwandeln. Bevorzugt erfolgt diese Umwandung derart, dass das Antriebsglied 120 sich relativ zur Motorwelle 116 mit vergrößertem Drehmoment, aber mit einer verringerten Drehgeschwindigkeit, dreht. Illustrativ ist dem Antriebsmotor 114 ein Motorgehäuse 115 zugeordnet, wie dem Getriebe 118 ein Getriebegehäuse 119. Das Motorgehäuse 115 wie auch das Getriebegehäuse 119 sind beispielshaft in dem Gehäuse 110 angeordnet. Es ist jedoch auch denkbar, dass der Antriebsmotor 114 und das Getriebe 118 unmittelbar im Gehäuse 110 angeordnet sein können, wenn die Handwerkzeugmaschine 100 in einer "open frame"-Bauweise ausgebildet ist.

Das Schlagwerk 122 ist mit dem Antriebsglied 120 verbunden und umfasst beispielhaft einen Schlagkörper 125, das schlagartige Drehimpulse mit hoher Intensität erzeugt. Über den Schlagkörper 125 werden diese schlagartigen Drehimpulse auf die Abtriebswelle 124, beispielsweise eine Arbeitsspindel, übertragen. Das Schlagwerk 122 umfasst ein Schlagwerkgehäuse 123, wobei das Schlagwerk 122 auch in einem anderen geeigneten Gehäuse, wie beispielsweise dem Getriebegehäuse 119, angeordnet sein kann. Das beispielhafte Schlagwerk 122 ist zum Antrieb der Abtriebswelle 124 ausgebildet. An der Abtriebswelle 124 ist eine Werkzeugaufnahme 150 vorgesehen. Bevorzugt ist die Werkzeugaufnahme 150 an der Abtriebswelle 124 angeformt und/oder ausgebildet. Vorzugsweise ist die Werkzeugaufnahme 150 in einer von der Antriebseinheit 111 wegweisenden, axialen Richtung 132 angeordnet. Die Werkzeugaufnahme 150 ist hier als eine Innensechskantaufnahme, nach Art eines Bithalters, ausgebildet, welche dazu vorgesehen ist, ein Einsatzwerkzeug 140 aufzunehmen. Das Einsatzwerkzeug ist nach Art eines Schrauberbits mit einer Mehrkant-Außenkupplung 142 ausgeformt. Die Art des Schrauberbits, beispielsweise nach HEX-Typ, ist dem Fachmann hinlänglich bekannt. Die vorliegende Erfindung ist jedoch nicht auf eine Verwendung von HEX-Schrauberbits beschränkt, sondern auch weitere, dem Fachmann als sinnvoll erscheinende, Werkzeugaufnahmen können Anwendung finden, wie beispielsweise HEX-Bohrer oder SDS-Quick-Einsatzwerkzeuge. Zudem sind dem Fachmann der Aufbau und die Funktionsweise eines geeigneten Bithalters hinlänglich bekannt.

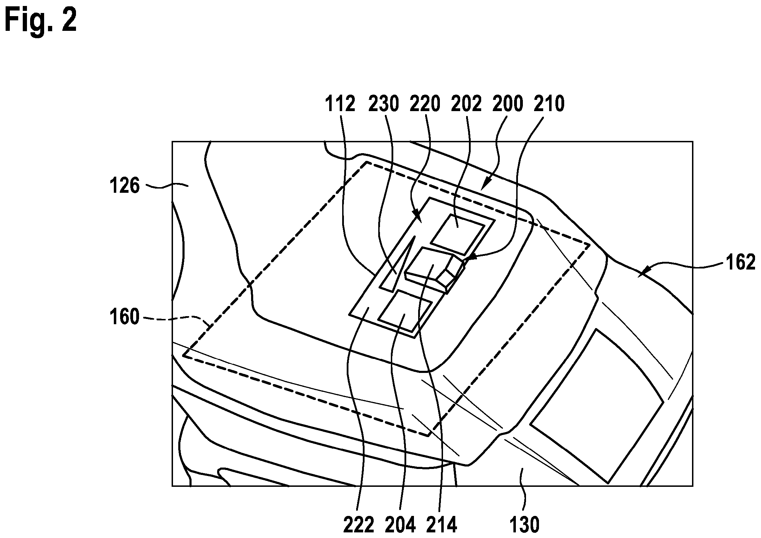

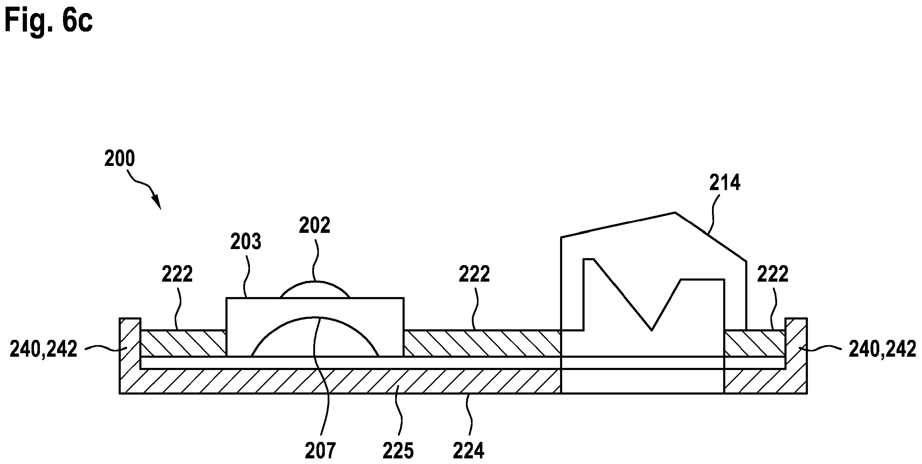

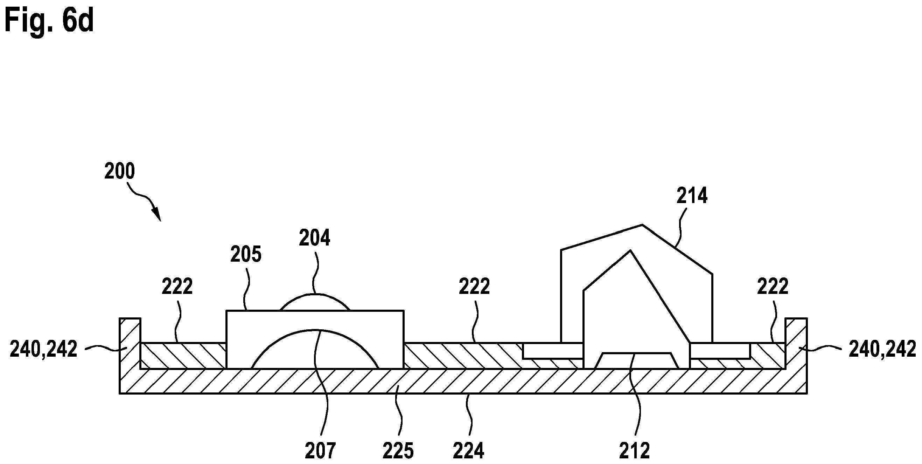

Die Handwerkzeugmaschine 100 weist das Gehäuse 110 und eine erfindungsgemäße Benutzerschnittstelle 200 auf. Die Benutzerschnittstelle 200 umfasst ein Bedienelement 202 und ein weiteres Bedienelement 204 und eine Arbeitsstellenbeleuchtungseinheit 210, siehe auch Fig. 2 bis 6. Das Bedienelement 202 und das weitere Bedienelement 204 weisen jeweils ein Rückstellelement in Form einer kuppelförmigen Feder 207 auf, siehe hierzu Fig. 6c und 6d. Die Benutzerschnittstelle 200 ist an dem Gehäuse 110 angeordnet.

Das Gehäuse 110 weist die Antriebseinheit 111, den Handschalter 128, die Energieversorgung, hier ausgebildet als der Handwerkzeugmaschinenakkupack 130, und die Benutzerschnittstelle 200 auf. Zudem umfasst das Gehäuse 110 eine Energieversorgungshaltevorrichtung 160. Ferner ist die Benutzerschnittstelle 200 an der Energieversorgungshaltevorrichtung 160 angeordnet. Die Energieversorgungshaltevorrichtung 160 nimmt den Handwerkzeugmaschinenakkupack 130 auf und bildet dabei einen Standfuß 162 mit einer Standfläche aus. Der Handwerkzeugmaschinenakkupack 130 ist werkzeuglos von der Energieversorgungshaltevorrichtung 160 lösbar. Weiter weist das Gehäuse 110 den Handgriff 126 und die Energieversorgungshaltevorrichtung 160 auf. Der Handgriff 126 kann von dem Benutzer ergriffen werden. In einer Ausführungsform ist die Energieversorgungshaltevorrichtung 160 an dem Handgriff 126 angeordnet. Mittels des Standfußes 162 kann die Handwerkzeugmaschine 100 abgestellt werden. Die Benutzerschnittstelle 200 ist in dieser Ausführungsform an der Energieversorgungshalteeinheit 160 angeordnet.

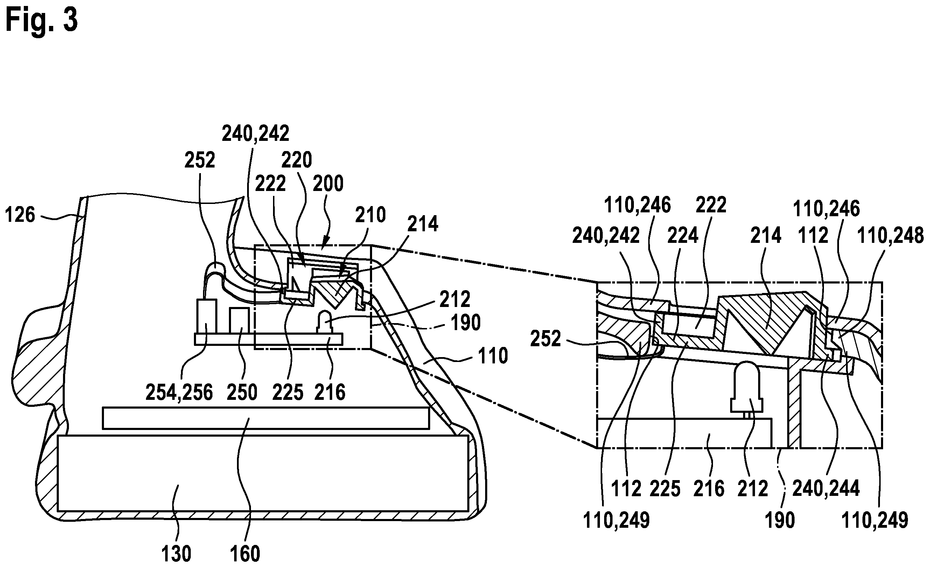

Fig. 2 stellt einen perspektivischen Ausschnitt der Handwerkzeugmaschine 100 mit der Benutzerschnittstelle 200 dar. Die Arbeitsstellenbeleuchtungseinheit 210 weist ein Leuchtmittel 212 und ein Lichtleitelement 214 auf, siehe hierzu auch Fig. 3. Die Arbeitsstellenbeleuchtungseinheit 210 sendet einen Lichtstrahl zur Beleuchtung eines unmittelbar vor der Handwerkzeugmaschine 100 liegenden Arbeitsstellenbereichs, sowie gegebenenfalls des austauschbaren Einsatzwerkzeugs 140, aus.

Die Benutzerschnittstelle 200 umfasst das Bedienelement 202 und das weitere Bedienelement 204. Das Bedienelement 202 dient zur Einstellung eines Betriebsmodus, in dieser Ausführungsform einer Drehzahlstufe. Das weitere Bedienelement 204 steuert und/oder regelt die Arbeitsstellenbeleuchtungseinheit 210. Das weitere Bedienelement 204 schaltet die Arbeitsstellenbeleuchtungseinheit 210 ein oder aus. Wie eingangs beschrieben, ist es auch denkbar, dass das Bedienelement 202 einen anderen Betriebsmodus verändert. Das Bedienelement 202 als auch das weitere Bedienelement 204 ist jeweils als ein Drückerelement ausgebildet, welches von dem Benutzer gedrückt werden kann.

Zudem umfasst die Benutzerschnittstelle 200 ein Trägerelement 220. Das Trägerelement 220 trägt die Benutzerschnittstelle 200 und leitet auftretende Bedienkräfte in das Gehäuse 110 ab. Hier ist das Trägerelement 220 als ein Bedienträgerelement 222 und als ein Lichtleitträgerelement 224 ausgeformt, siehe auch Fig. 3, 4 und 6. Das Bedienträgerelement 222 trägt das Bedienelement 202 und das weitere Bedienelement 204. Das Lichtleitträgerelement 224 trägt das Lichtleitelement 214, siehe auch Fig. 3. Zusätzlich umfasst die Benutzerschnittstelle 200 ein Anzeigeelement 230. Das Anzeigeelement 230 zeigt eine Information zu einem Betriebsmodus, hier der Drehzahlstufe, an. In dieser Ausführungsform umfasst das Bedienträgerelement 222 das Anzeigeelement 230.

Fig. 3 zeigt eine Schnittansicht der Benutzerschnittstelle 200 an der Handwerkzeugmaschine 100. Zudem ist ein weiterer vergrößerter Ausschnitt 190 in Fig. 3 gezeigt. Die Benutzerschnittstelle 200 wird in einer Ausnehmung 112 des Gehäuses 110 aufgenommen und ragt aus der Ausnehmung 112 heraus. Die Arbeitsstellenbeleuchtungseinheit 210 weist das Leuchtmittel 212 und das Lichtleitelement 214 auf. Hier ist das Leuchtmittel 212 als eine LED ausgebildet. Das Lichtleitelement 214 ist als eine Fokussierlinse ausgeformt. Das Leuchtmittel 212 sendet Licht aus. Das Lichtleitelement 214 fokussiert das Licht des Leuchtmittels 212 und leitet dieses als den Lichtstrahl in Richtung des Arbeitsstellenbereichs.

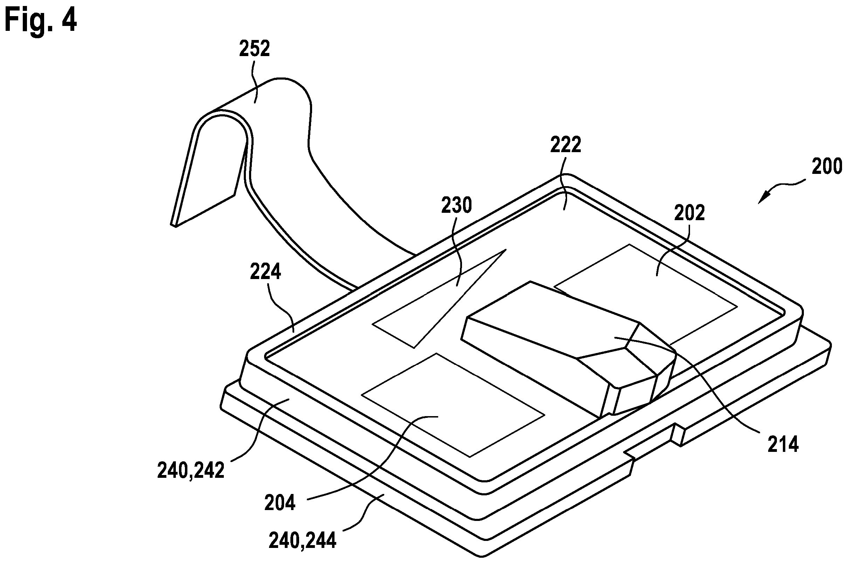

Das Lichtleitträgerelement 224 der Benutzerschnittstelle 200 trägt das Lichtleitelement 214 und richtet es am Gehäuse 110 aus. Das Lichtleitträgerelement 224 umfasst eine Lagerungseinheit 240 zur Lagerung der Benutzerschnittstelle 200 am Gehäuse 110 der Handwerkzeugmaschine 100, siehe auch Fig. 4 bis 6. Die Lagerungseinheit 240 umfasst ein erstes umlaufendes Lagerungselement 242, siehe auch Fig. 4 bis 6. Das Gehäuse 110 umfasst ein Halteelement 246. Das erste Lagerungselement 242 bildet mit dem Halteelement 246 eine Wirkverbindung zur vertikalen Lagerung der Benutzerschnittstelle 200 aus. Die vertikale Lagerung ist relativ zu einer Bezugsebene. In dieser Ausführungsform ist die Bezugsebene die Grundplatte 225 des Lichtleitträgerelements 224. Das erste Lagerungselement 242 ist als ein umlaufender Steg ausgeformt und mit dem Lichtträgerelement 224 einstückig ausgebildet. Das Halteelement 246 ist zumindest teilweise elastisch verformbar ausgeformt. Das Halteelement 246 wird von einem Soft Grip Material gebildet, welches das Gehäuse 110 zumindest teilweise umgibt. Das Halteelement 246 bildet an dem Gehäuse 110 einen um die Ausnehmung 112 umlaufenden Vorsprung aus, der in die Ausnehmung 112 hineinragt. So fixiert das Halteelement 246 das erste Lagerungselement 242 zumindest kraftschlüssig zur vertikalen Lagerung der Benutzerschnittstelle 200.

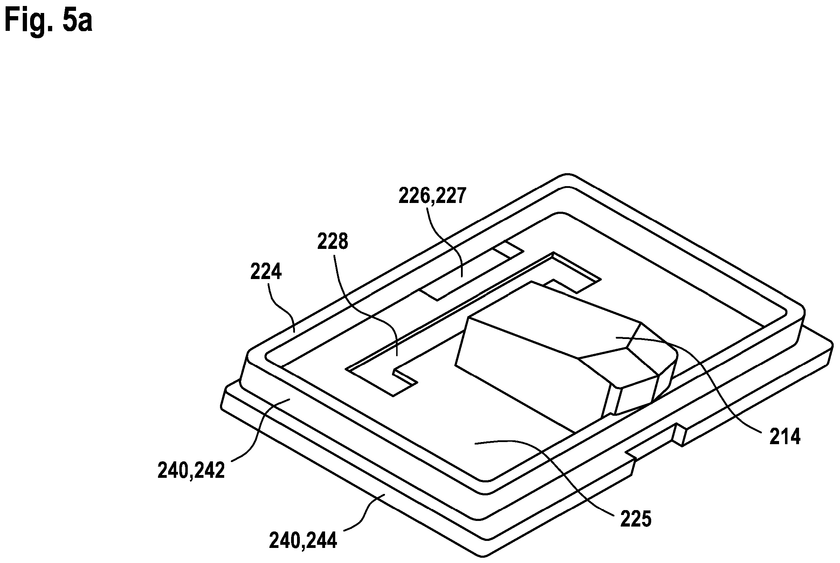

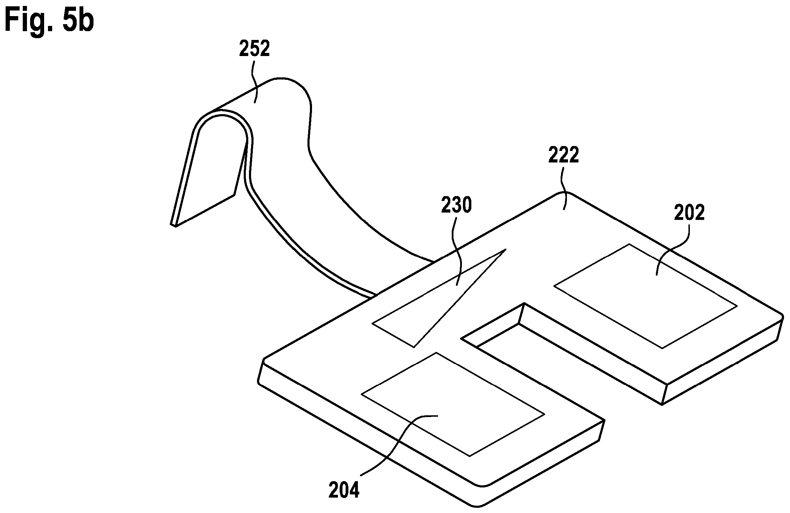

Zudem weist die Lagerungseinheit 240 ein zweites umlaufendes Lagerungselement 244 auf, siehe auch Fig. 4 und 5. Das Gehäuse 110 umfasst ein teilweise umlaufendes Festlegungselement 249. Das zweite Lagerungselement 244 bildet mit dem Festlegungselement 249 eine Wirkverbindung zur horizontalen Lagerung der Benutzerschnittstelle 200 aus. Die horizontale Lagerung ist relativ zu der Bezugsebene, hier der Grundplatte 225 des Lichtleitträgerelements 224. Das zweite Lagerungselement 244 ist als ein Rahmen an drei Seiten des Lichtleitträgerelements 224 ausgeformt. Weiter ist das zweite Lagerungselement 244 einstückig mit dem Lichtträgerelement 224 ausgebildet. Das Festlegungselement 249 legt das zweite Lagerungselement 244 am Gehäuse 110 fest. Das Festlegungselement 249 wird an dem Gehäuse 110 durch eine Hartkomponente des Gehäuses 110 ausgeformt. Das Festlegungselement 249 ist in dieser Ausführungsform ein umlaufender Rahmen. Das Festlegungselement 249 legt das zweite Lagerungselement 244 formschlüssig zur horizontalen Lagerung der Benutzerschnittstelle 200 fest. In dieser Ausführungsform stützt sich ein Abschnitt des ersten Lagerungselements 242 an dem Festlegungselement 249 zur horizontalen Lagerung des Lichtleitträgerelements 224 ab. Die Hartkomponente des Gehäuses 110 fixiert in drei Abschnitten 248 der Ausnehmung 112 das zweite Lagerungselement 244 formschlüssig durch einen Hinterschnitt zur vertikalen Lagerung des Lichtleitträgerelements 224.

Die Handwerkzeugmaschine 100 weist eine Signalverarbeitungseinheit 250 auf. Die Signalverarbeitungseinheit 250 ist im Gehäuse 110 angeordnet. Die Signalverarbeitungseinheit 250 empfängt Signale von der Benutzerschnittstelle 200 und verarbeitet diese. Nach der Verarbeitung der Signale gibt die Signalverarbeitungseinheit 250 die Signale in Form eines Ausgabesignal aus. Die Signalverarbeitungseinheit 250 ist hier als ein Mikroprozessor ausgebildet.

Das Lichtleitträgerelement 224 umfasst eine Aufnahme 226 für eine elektrische Kontaktierung der Benutzerschnittstelle 200, siehe auch Fig. 5a. Die Aufnahme 226 ist als eine Durchführungsöffnung 227 ausgeformt. Eine Signalleitung 252 stellt die elektrische Kontaktierung der Benutzerschnittstelle 200 mit der Signalverarbeitungseinheit 250 her. In dieser Ausführungsform ist das Bedienträgerelement 222 mit der Signalleitung 252 verbunden, siehe auch Fig. 4 und 5b. Die Signalleitung 252 greift durch die Durchgangsöffnung 227 hindurch und verbindet die Benutzerschnittstelle 200 mit der Signalverarbeitungseinheit 250. Die Signalverarbeitungseinheit 250 umfasst ein Verbindungselement 254 zur Verbindung mit der Signalleitung 252. Das Verbindungselement 254 ist hier als eine Steckkupplung 256 ausgeformt. Hierdurch ist die Signalleitung 252 lösbar mit dem Verbindungselement 254 verbunden. Die Signalleitung 252 ist in dieser Ausführungsform an dem Bedienträgerelement 222 ausgebildet. Die Signalleitung 252 nimmt Signale, die durch die Betätigung des Bedienelementes entstehen, auf und leitet diese an die Signalverarbeitungseinheit 250 weiter. Weiter leitet die Signalleitung 252 die Ausgabesignale von der Signalverarbeitungseinheit 250 an die Benutzerschnittstelle 200 weiter. Hier ist das Anzeigeelement 230 auch mittels der Signalleitung 252 mit der Signalverarbeitungseinheit 250 verbunden. Das Verbindungselement 254, die Signalverarbeitungseinheit 250 und das Leuchtmittel 212 sind in dieser Ausführungsform auf einer Platine 216 angeordnet und miteinander elektrisch verbunden.

Fig. 4 stellt eine perspektivische Ansicht der Benutzerschnittstelle 200 dar. Das Bedienträgerelement 222 ist an dem Lichtleitträgerelement 224 befestigt. Hier sind das Bedienträgerelement 222 und das Lichtleitträgerelement 224 mittels einer Klebeverbindung verbunden. Das Bedienträgerelement 222 ist c-förmig ausgebildet und umschließt teilweise das Lichtleitelement 224.

Fig. 5a zeigt eine perspektivische Ansicht des Lichtleitträgerelements 224 mit dem Lichtleitelement 214. In dieser Ausführungsform sind das Lichtleitträgerelement 224 und das Lichtleitelement 214 einstückig. Das Lichtleitträgerelement 224 nimmt die Bedienkräfte, die durch die Betätigung des Bedienelementes 202 und/oder des weiteren Bedienelementes 204 entstehen, auf und leitet diese an das Gehäuse 110 weiter. Das Lichtleitträgerelement 224 umfasst ein Volumenausgleichselement 228 für das Bedienelement 202, das weitere Bedienelement 204 und für das Anzeigeelement 230. Das Volumenausgleichselement 228 ist an dem Lichtleitträgerelement 224 ausgeformt. Das Volumenausgleichselement 228 ist als eine c-förmige Nut ausgebildet. Das Volumenausgleichselement 228 gleicht eine Temperatur und/oder einen Druck aus. Das Volumenausgleichselement 228 ist mit dem Bedienelement 202 und dem weiteren Bedienelement 204 wirkverbunden. Es gleicht einen Bediendruck bei der Betätigung des Bedienelementes 202 und/oder dem weiteren Bedienelement 204 aus, der zwischen dem Bedienträgerelement 222 und dem Lichtleitträgerelement 224 entstehen kann.

Fig. 5b zeigt eine perspektivische Ansicht Bedienträgerelementes 222 mit dem Bedienelement 202 und dem weiteren Bedienelement 204. Zudem ist das Anzeigeelement 230 und die Signalleitung 252 gezeigt. Das Bedienträgerelement 222 mit dem Bedienelement 202 und dem weiteren Bedienelement 204 ist hier nach Art einer Folientastatur ausgebildet sein. Das Bedienträgerelement 222 nimmt die Bedienkräfte von dem Bedienelement 202 und/oder dem weiteren Bedienelement 204 auf, die durch die Betätigung entstehen. Zusätzlich leitet das Bedienträgerelement 222 die Bedienkräfte an das Lichtleitträgerelement 224 weiter.

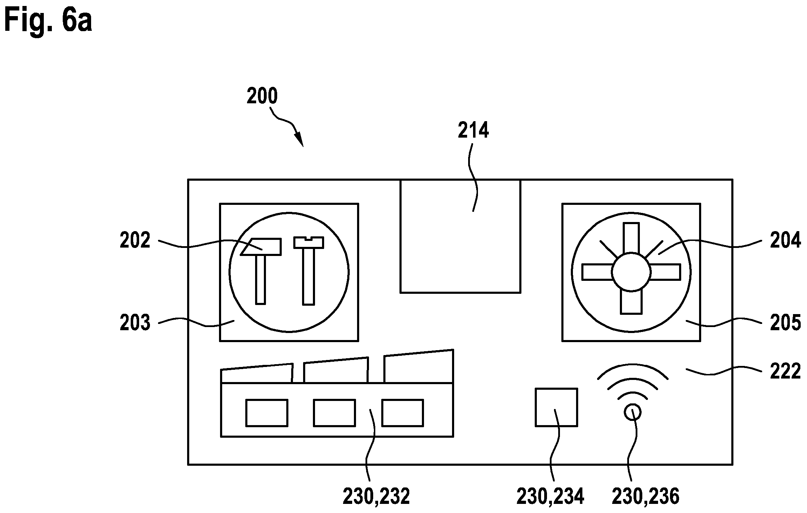

Fig. 6a stellt eine Draufsicht einer ersten alternativen Ausführungsform der Benutzerschnittstelle 200 dar. Das Bedienelement 202 und das weitere Bedienelement 204 weisen jeweils einen bedruckten Bereich 203, 205 auf. Der bedruckte Bereich 203, 205 ist jeweils auf einer Bedienfläche des Bedienelementes 202 und des weiteren Bedienelementes 204 ausgebildet. Der bedruckte Bereich 203, 205 zeigt dem Benutzer eine Funktion des Bedienelementes 202 und des weiteren Bedienelementes 204 an. Die Funktion für das weitere Bedienelement 204 wird auf der Bedienfläche in Form einer Glühbirne angezeigt. Die Funktion für das Bedienelement 202 wird auf der Bedienfläche in Form eines Hammers mit einer Schraube angezeigt.

Weiter zeigt die erste alternative Ausführungsform das Anzeigeelement 230 in Form eines Drehzahlanzeigeelements 232. Das Drehzahlanzeigeelement 232 weist drei LEDs zur Anzeige der eingestellten Drehzahlstufe auf. Zudem ist das Anzeigeelement 230 als ein Funkverbindungsanzeigeelement 234 ausgeformt. Das Funkverbindungsanzeigeelement 234 zeigt dem Benutzer an, ob eine aktive Funkverbindung zwischen der Handwerkzeugmaschine 100 und einem weiteren elektrischen Gerät vorhanden ist. Das Funkverbindungsanzeigeelement 234 ist als eine LED ausgestaltet. Zudem ist das Anzeigeelement 230 hier als ein Symbol 236 zur Anzeige einer drahtlosen Verbindung ausgeformt. Hier soll dem Benutzer gezeigt werden, dass die Handwerkzeugmaschine 100 eine drahtlose Verbindung ausbilden kann.

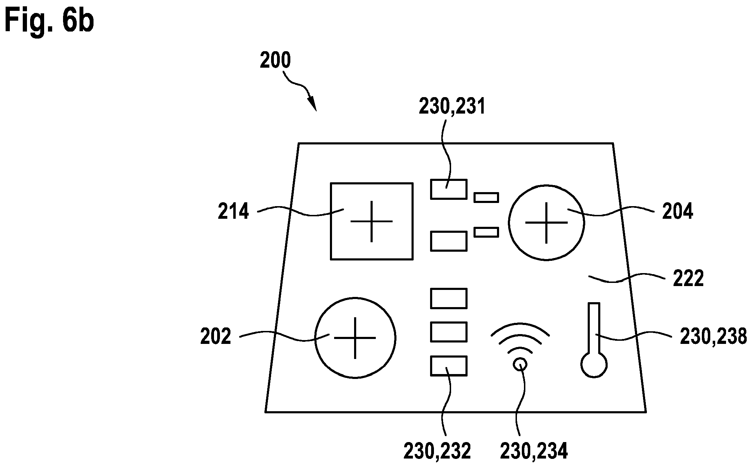

Fig. 6b zeigt eine Draufsicht einer zweiten alternativen Ausführungsform der Benutzerschnittstelle 200. Im Unterschied zu Fig. 6a ist hier das Anzeigeelement 230 zusätzlich als ein Arbeitsstellenbeleuchtungsanzeigeelement 231 und als ein Temperaturanzeigeelement 238 ausgebildet. Das Arbeitsstellenbeleuchtungsanzeigeelement 231 zeigt dem Benutzer an, ob die Arbeitsstellenbeleuchtungseinheit 210 eingeschalten oder ausgeschalten ist. Das Arbeitsstellenbeleuchtungsanzeigeelement 231 ist hier als zwei LEDs ausgebildet. Das Temperaturanzeigeelement 238 zeigt dem Benutzer eine Temperatur der Handwerkzeugmaschine 100 an. Es ist als eine LED ausgebildet.

Fig. 6c stellt eine schematische Schnittansicht einer dritten alternativen Ausführungsform der Benutzerschnittstelle 200 dar. In der dritten alternativen Ausführungsform umfasst das Bedienträgerelement 222 das Lichtleitelement 214. Das Lichtleitelement 214 ist mit dem Bedienträgerelement 222 verbunden. Auch in dieser Ausführungsform ist das Bedienträgerelement 222 an dem Lichtleitträgerelement 224 befestigt.

Fig. 6d zeigt eine schematische Schnittansicht einer vierten alternativen Ausführungsform der Benutzerschnittstelle 200. Wie in der dritten alternativen Ausführungsform umfasst das Bedienträgerelement 222 das Lichtleitelement 214 und ist mit diesem verbunden. Im Unterschied zu der dritten alternativen Ausführungsform ist das Leuchtmittel 212 auf dem Lichtleitträgerelement 224 angeordnet. Auch in dieser Ausführungsform ist das Bedienträgerelement 222 an dem Lichtleitträgerelement 224 befestigt.

## Patentansprüche

1. Handwerkzeugmaschine (100) mit einer Antriebseinheit (111), wobei die Antriebseinheit (111) mittels zumindest eines Handschalters (128) betätigbar ist, mit einem Gehäuse (110) und mit zumindest einer Benutzerschnittstelle (200), wobei die Benutzerschnittstelle (200) zumindest ein Bedienelement (202) umfasst und die Benutzerschnittstelle (200) zumindest eine Arbeitsstellenbeleuchtungseinheit (210) aufweist, wobei die Arbeitsstellenbeleuchtungseinheit (210) zumindest ein Leuchtmittel (212) und zumindest ein Lichtleitelement (214) umfasst,
**dadurch gekennzeichnet, dass**
die Benutzerschnittstelle (200) zumindest ein Trägerelement (220) aufweist, das dazu ausgebildet ist, die Benutzerschnittstelle (200) zu tragen und auftretende Bedienkräfte in das Gehäuse (110) abzuleiten.

2. Handwerkzeugmaschine (100) nach Anspruch 1, **dadurch gekennzeichnet, dass** das Trägerelement (220) als zumindest ein Bedienträgerelement (222) ausgebildet ist, wobei das Bedienträgerelement (222) zumindest das Bedienelement (202) trägt, und/oder als zumindest ein Lichtleitträgerelement (224) ausgebildet ist, wobei das Lichtleitträgerelement (224) zumindest das Lichtleitelement (214) trägt.

3. Handwerkzeugmaschine (100) nach Anspruch 2, **dadurch gekennzeichnet, dass** das Lichtleitträgerelement (224) zumindest eine Aufnahme (226) für eine elektrische Kontaktierung der Benutzerschnittstelle (200) aufweist.

4. Handwerkzeugmaschine (100) nach Anspruch 2 oder 3, **dadurch gekennzeichnet, dass** das Lichtleitträgerelement (224) zumindest ein Volumenausgleichselement (228) zumindest für das Bedienelement (202) aufweist.

5. Handwerkzeugmaschine (100) nach einem der Ansprüche 1 bis 4, **dadurch gekennzeichnet, dass** das Trägerelement (220), insbesondere das Lichtleitträgerelement (224), zumindest eine Ausnehmung aufweist, durch die zumindest das Lichtleitelement (214) durchführbar ist.

6. Handwerkzeugmaschine (100) nach einem der Ansprüche 1 bis 5, **dadurch gekennzeichnet, dass** das Lichtleitelement (214) mit dem Trägerelement (220), insbesondere dem Lichtleitträgerelement (224), befestigt ist.

7. Handwerkzeugmaschine (100) nach einem der Ansprüche 1 bis 6, **dadurch gekennzeichnet, dass** das Trägerelement (220), insbesondere das Lichtleitträgerelement (224), und das Lichtleitelement (214) einstückig ausgebildet sind.

8. Handwerkzeugmaschine (100) nach einem der Ansprüche 1 bis 7, **dadurch gekennzeichnet, dass** das Trägerelement (220), insbesondere das Lichtleitträgerelement (224), zumindest eine Lagerungseinheit (240) zur Lagerung der Benutzerschnittstelle (200) am Gehäuse (110) der Handwerkzeugmaschine (100) aufweist.

9. Handwerkzeugmaschine (100) nach Anspruch 8, **dadurch gekennzeichnet, dass** die Lagerungseinheit (240) ein erstes zumindest teilweise umlaufendes Lagerungselement (242) umfasst und das Gehäuse (110) zumindest ein zumindest teilweise umlaufendes Halteelement (246) aufweist, wobei das erste Lagerungselement (242) und das Halteelement (246) eine Wirkverbindung zur vertikalen Lagerung der Benutzerschnittstelle (200) ausbilden.

10. Handwerkzeugmaschine (100) nach Anspruch 8 oder 9, **dadurch gekennzeichnet, dass** die Lagerungseinheit (240) ein zweites zumindest teilweise umlaufendes Lagerungselement (244) umfasst und das Gehäuse (110) zumindest ein zumindest teilweise umlaufendes Festlegungselement (249) aufweist, wobei das zweite Lagerungselement (244) und das Festlegungselement (249) eine Wirkverbindung zur horizontalen Lagerung der Benutzerschnittstelle (200) ausbilden.

11. Handwerkzeugmaschine (100) nach einem der Ansprüche 1 bis 10, **dadurch gekennzeichnet, dass** das Bedienträgerelement (222) an dem Lichtleitträgerelement (224) befestigt ist.

12. Handwerkzeugmaschine (100) nach einem der vorhergehenden Ansprüche, **dadurch gekennzeichnet, dass** das Bedienelement (202) zumindest zur Einstellung zumindest eines Betriebsmodus, insbesondere einer Drehzahlstufe, und/oder zumindest zur Steuerung und/oder Regelung der Arbeitsstellenbeleuchtungseinheit (210) dient.

13. Handwerkzeugmaschine (100) nach einem der vorhergehenden Ansprüche, **dadurch gekennzeichnet, dass** die Benutzerschnittstelle (200) zumindest ein weiteres Bedienelement (204) umfasst, wobei das weitere Bedienelement (204) zumindest zur Einstellung zumindest eines Betriebsmodus, insbesondere einer Drehzahlstufe, und/oder zumindest zur Steuerung und/oder Regelung der Arbeitsstellenbeleuchtungseinheit (210) dient.

14. Handwerkzeugmaschine (100) nach einem der vorhergehenden Ansprüche, **dadurch gekennzeichnet, dass** das Gehäuse (110) zumindest eine Energieversorgungshaltevorrichtung (160), insbesondere eine Handwerkzeugmaschinenakkupackhaltevorrichtung, aufweist, an der die Benutzerschnittstelle (200) angeordnet ist.

## Claims

1. Hand-held power tool (100) having a drive unit (111), wherein the drive unit (111) is activatable by means of at least one manual switch (128), having a housing (110) and having at least one user interface (200), wherein the user interface (200) comprises at least one operating element (202) and the user interface (200) has at least one workplace illumination unit (210), wherein the workplace illumination unit (210) comprises at least one illumination means (212) and at least one light guide element (214),
**characterized in that**
the user interface (200) has at least one support element (220) which is designed to support the user interface (200) and to dissipate operating forces that occur into the housing (110).

2. Hand-held power tool (100) according to Claim 1, **characterized in that** the support element (220) is designed as at least one operator support element (222), wherein the operator support element (222) supports at least the operating element (202), and/or is designed as at least one light guide support element (224), wherein the light guide support element (224) supports at least the light guide element (214).

3. Hand-held power tool (100) according to Claim 2, **characterized in that** the light guide support element (224) has at least one receptacle (226) for electrically contacting the user interface (200).

4. Hand-held power tool (100) according to Claim 2 or 3, **characterized in that** the light guide support element (224) has at least one volume compensation element (228) at least for the operating element (202).

5. Hand-held power tool (100) according to one of Claims 1 to 4, **characterized in that** the support element (220), in particular the light guide support element (224), has at least one clearance through which at least the light guide element (214) is able to be passed through.

6. Hand-held power tool (100) according to one of Claims 1 to 5, **characterized in that** the light guide element (214) is fastened by the support element (220), in particular the light guide support element (224).

7. Hand-held power tool (100) according to one of Claims 1 to 6, **characterized in that** the support element (220), in particular the light guide support element (224), and the light guide element (214) are formed in one piece.

8. Hand-held power tool (100) according to one of Claims 1 to 7, **characterized in that** the support element (220), in particular the light guide support element (224), has at least one mounting unit (240) for mounting the user interface (200) on the housing (110) of the hand-held power tool (100).

9. Hand-held power tool (100) according to Claim 8, **characterized in that** the mounting unit (240) comprises a first at least partially encircling mounting element (242), and the housing (110) has at least one at least partially encircling holding element (246), wherein the first mounting element (242) and the holding element (246) form an operative connection for the vertical mounting of the user interface (200).

10. Hand-held power tool (100) according to Claim 8 or 9, **characterized in that** the mounting unit (240) comprises a second at least partially encircling mounting element (244), and the housing (110) has at least one at least partially encircling fixing element (249), wherein the second mounting element (244) and the fixing element (249) form an operative connection for the horizontal mounting of the user interface (200).

11. Hand-held power tool (100) according to one of Claims 1 to 10, **characterized in that** the operator support element (222) is fastened to the light guide support element (224).

12. Hand-held power tool (100) according to one of the preceding claims, **characterized in that** the operating element (202) serves at least for setting at least an operating mode, in particular a rotating speed stage, and/or at least for controlling in an open loop and/or closed loop the workplace illumination unit (210).

13. Hand-held power tool (100) according to one of the preceding claims, **characterized in that** the user interface (200) comprises at least one further operating element (204), wherein the further operating element (204) serves at least for setting at least an operating mode, in particular a rotating speed stage, and/or at least for controlling in an open loop and/or closed loop the workplace illumination unit (210).

14. Hand-held power tool (100) according to one of the preceding claims, **characterized in that** the housing (110) has at least one energy supply holding device (160), in particular a hand-held power tool rechargeable battery pack holding device, on which the user interface (200) is disposed.

## Revendications

1. Machine-outil portative (100) avec une unité d'entraînement (111), l'unité d'entraînement (111) pouvant être actionnée au moyen d'au moins un commutateur manuel (128), avec un boîtier (110) et avec au moins une interface utilisateur (200), l'interface utilisateur (200) comportant au moins un élément de commande (202) et l'interface utilisateur (200) comportant au moins une unité d'éclairage de site de travail (210), l'unité d'éclairage de site de travail (210) comprenant au moins un moyen d'éclairage (212) et au moins un élément de guidage de lumière (214),
**caractérisée en ce que**
l'interface utilisateur (200) comporte au moins un élément de support (220) qui est formé pour porter l'interface utilisateur (200) et pour dissiper des forces de commande se produisant dans le boîtier (110).

2. Machine-outil portative (100) selon la revendication 1, **caractérisée en ce que** l'élément de support (220) est formé comme au moins un élément de support de commande (222), l'élément de support de commande (222) portant au moins l'élément de commande (202) et/ou étant formé comme au moins un élément de support de guidage de lumière (224), l'élément de support de guidage de lumière (224) portant au moins l'élément de guidage de lumière (214).

3. Machine-outil portative (100) selon la revendication 2, **caractérisée en ce que** l'élément de support de guidage de lumière (224) comporte au moins un logement (226) pour établir un contact électrique avec l'interface utilisateur (200).

4. Machine-outil portative (100) selon la revendication 2 ou 3, **caractérisée en ce que** l'élément de support de guidage de lumière (224) comporte au moins un élément de compensation de volume (228) au moins pour l'élément de commande (202).

5. Machine-outil portative (100) selon l'une des revendications 1 à 4, **caractérisée en ce que** l'élément de support (220), en particulier l'élément de support de guidage de lumière (224), comporte au moins un évidement à travers lequel au moins l'élément de guidage de lumière (214) peut être passé.

6. Machine-outil portative (100) selon l'une des revendications 1 à 5, **caractérisée en ce que** l'élément de guidage de lumière (214) est fixé à l'élément de support (220), en particulier à l'élément de support de guidage de lumière (224).

7. Machine-outil portative (100) selon l'une des revendications 1 à 6, **caractérisée en ce que** l'élément de support (220), en particulier l'élément de support de guidage de lumière (224), et l'élément de guidage de lumière (214) sont formés d'un seul tenant.

8. Machine-outil portative (100) selon l'une des revendications 1 à 7, **caractérisée en ce que** l'élément de support (220), en particulier l'élément de support de guidage de lumière (224), comporte au moins une unité de montage (240) pour le montage de l'interface utilisateur (200) sur le boîtier (110) de la machine-outil portative (100).

9. Machine-outil portative (100) selon la revendication 8, **caractérisée en ce que** l'unité de montage (240) comprend un premier élément de montage (242) au moins en partie périphérique et le boîtier (110) comporte au moins un élément de maintien (246) au moins en partie périphérique, le premier élément de montage (242) et l'élément de maintien (246) formant une liaison active pour le montage vertical de l'interface utilisateur (200).

10. Machine-outil portative (100) selon la revendication 8 ou 9, **caractérisée en ce que** l'unité de montage (240) comprend un deuxième élément de montage (244) au moins en partie périphérique et le boîtier (110) comporte au moins un élément d'immobilisation (249) au moins en partie périphérique, le deuxième élément de montage (244) et l'élément d'immobilisation (249) formant une liaison active pour le montage horizontal de l'interface utilisateur (200).

11. Machine-outil portative (100) selon l'une des revendications 1 à 10, **caractérisée en ce que** l'élément de support de commande (222) est fixé sur l'élément de support de guidage de lumière (224).

12. Machine-outil portative (100) selon l'une des revendications précédentes, **caractérisée en ce que** l'élément de commande (202) sert au moins au réglage d'au moins un mode de fonctionnement, en particulier d'un étage de vitesse de rotation, et/ou au moins à la commande et/ou à la régulation de l'unité d'éclairage de site de travail (210).

13. Machine-outil portative (100) selon l'une des revendications précédentes, **caractérisée en ce que** l'interface utilisateur (200) comprend au moins un autre élément de commande (204), l'autre élément de commande (204) servant au moins au réglage d'au moins un mode de fonctionnement, en particulier d'un étage de vitesse de rotation, et/ou au moins à la commande et/ou à la régulation de l'unité d'éclairage de site de travail (210).

14. Machine-outil portative (100) selon l'une des revendications précédentes, **caractérisée en ce que** le boîtier (110) comporte au moins un dispositif de maintien d'alimentation en énergie (160), en particulier un dispositif de maintien de bloc-batterie de machine-outil portative, sur lequel est disposée l'interface utilisateur (200).
